# EUROPEAN PATENT APPLICATION

(11) **EP 4 715 643 A1**
(43) Date of publication of application: **25.03.2026**
(21) Application number: 24202337.2
(22) Date of filing: 24.09.2024
(51) Int. Cl.: G06F 21/44, H04L 9/40, H04W 12/06

(54) **METHOD AND SYSTEM FOR AUTHENTICATING AUTOMATED DRIVING VEHICLES AT A HUB**

(71) Applicant: VOLKSWAGEN AG, 38440 Wolfsburg (DE)
(72) Inventor: Fricke, Jenny, 38118 Braunschweig (DE); Pfadler, Andreas, 13357 Berlin (DE)

(57) **Abstract**

The invention relates to a system and a method for authenticating automated driving vehicles (20, 20-n) at hub (30), wherein each automated driving vehicle has a unique assigned vehicle ID, the method comprising the steps of:
collecting log entries (110) during operation,
adding each collected log entry (110) to an in-vehicle log collection (28) and
also communicating each collected log entry (110) together with the vehicle's unique assigned vehicle ID to a central log server (40);
and performing an authentication of one of the automated driving vehicles (20, 20-n) at the hub (30) by
retrieving unique assigned vehicle ID and a set of vehicle log entries (110) specified by one or more vehicle authentication parameters from said vehicle, and communicating the retrieved unique assigned vehicle ID and one or more server authentication parameters to the central server (40) and retrieving a set of server log entries associated with the communicated retrieved unique assigned vehicle ID specified by said one or more server authentication parameters, comparing the sets of retrieved vehicle log entries (110) and server log entries and deriving a comparison result, and either authenticating said one of the automated driving vehicles (20, 20-n) as being the genuine automated driving vehicle or denying authentication by providing an authentication message.

## Description

The invention is concerned with the authentication of automated driving (AD) vehicles at the hub to which the automated driving vehicles regularly return. Using a proper authentication of the automated driving vehicles can guarantee only that only genuine automated driving vehicle belonging to that hub get access to the hub.

Mobility-as-a-service (MaaS) and transport-as-a-service (TaaS) products are more and more of interest, where a mobility provider owns a fleet of automated driving (AD) vehicles. These automated driving vehicles regularly return to the central hub for different purposes, e.g., for charging, dumping their data and uploading it to a backend of the service provider, cleaning, servicing, etc. to name just a few.

When the automated driving vehicles return to the hub, they must authenticate themselves to ensure that only the vehicles belonging to the fleet are granted access, for example, can be parked on the premises of the hub, become serviced, get cleaned, have their data exchanged etc.

In US 9,582,943 B1 driving data are collected from a vehicle by a device. The device comprises a vehicle interface for interfacing with an on-board diagnostics system of a vehicle and retrieving vehicle parameters of the vehicle from the on-board diagnostics system. The retrieved vehicle parameters include a vehicle identification parameter and driving parameters. The device includes a processor configured to identify the vehicle based on the vehicle identification parameter and determine data describing how the vehicle is driven based on the retrieved vehicle parameters. The device also includes an output interface configured to output the determined data.

IN 202341062747 discloses a convoy vehicle identification and authentication system and a method thereof. Disclosed is a convoy vehicle identification and authentication system for determining friend or foe status of approaching vehicles in a defense sector. It includes a Base Station module configured to register and authenticate convoy vehicles by generating unique encrypted identification (ID) for each vehicle and storing registration details in a blockchain architecture, a Private Blockchain module for facilitating decentralized data storage and sharing of authentication records, mission details, and Lists of Mission (LOM) and Deviated (LOD) convoy vehicles, an Comparison module for analyzing authentication data, mission details, and real-time location information, determining the friend or foe status of approaching vehicles based on the analyzed data, and a Path Detection module within the Base Station module, tracking convoy vehicle paths and updating the List of Deviated (LOD) convoy vehicles based on real-time location data.

The challenge arises that the automated driving vehicles are networked systems, and therefore vulnerable to cyber-attacks. A hacker could try to bypass authentication mechanisms and gain access to the hub and/or automated driving vehicles or just might foist his own automated driving vehicles on the fleet owner of the hub.

Therefore, the need exists to improve the authentication process of automated driving vehicles at the respective hub.

The technical problem is solved by a method according to claim 1 a hub authentication device according to claim 13, a vehicle authentication device according to claim 14, a central server according to claim 15 and a system according to claim 16. Further advantageous embodiments are described by the dependent claims.

The basic idea is to use log data that are collected anyhow during the operation of the automated driving vehicles for authentication purposes. For a hacker it will be very difficult to fraud all log entries that are collected during operation. Therefore, the collection of log entries which are closely connected to the operation of the respective automated driving vehicle forms a good basis for authenticating the respective automated driving vehicle as one of the genuine automated driving vehicles associated with the respective hub.

Therefore, a method is provided for authenticating automated driving vehicles of a group of automated driving vehicles at hub, wherein each automated driving vehicle has a unique assigned vehicle ID, the method comprising the steps of:
collecting log entries by the automated driving vehicles during operation, wherein each log entry comprises at least a timestamp and a datum specifying the log entry event, wherein the timestamp specifies the time of occurrence of said log entry event,
adding each collected log entry to an in-vehicle log collection as vehicle log entry of the respective automated driving vehicle collecting said log entry and
also communicating each collected log entry together with the vehicle's unique assigned vehicle ID to a central log server and adding the log entry to a central log collection as server log entry associated with the unique assigned vehicle ID; and
performing an authentication of one of the automated driving vehicles at the hub by retrieving the unique assigned vehicle ID from said one of the automated driving vehicles and retrieving a set of vehicle log entries from the in-vehicle log collection, wherein the set of retrieved vehicle log entries is specified by one or more vehicle authentication parameters, and communicating the retrieved unique assigned vehicle ID and one or more server authentication parameters to the central server and retrieving a set of server log entries associated with the communicated retrieved unique assigned vehicle ID from the central server's central log collection, wherein the set of retrieved server log entries is specified by said one or more server authentication parameters,
comparing the set of retrieved vehicle log entries and the set of server log entries and deriving a comparison result, and based on the comparison result either authenticating said one of the automated driving vehicles as being the genuine automated driving vehicle associated with a unique assigned vehicle ID or denying authentication of said one of the automated driving vehicles by providing an authentication message. The message is provided in each case. It can be provided as a signal.

The advantage of this method is an increase in security. It is very difficult for a hacker to detect all events that cause the collection of a log entry. Even if the hacker observes the 1 of the genuine automated driving vehicles to assemble a fraudulent log entry collection. It is very unlikely that this collection will be identical to the one that is created by the genuine automated driving vehicle during operations observed.

Therefore, also a hub authentication device for authenticating automated driving vehicles of a group of automated driving vehicles at hub, wherein each automated driving vehicle has a unique assigned vehicle ID, wherein each automated driving vehicle is configured to collect log entries the during operation, wherein each log entry comprises at least a timestamp and a datum specifying the log entry event, wherein the timestamp specifies the time of occurrence of said log entry event, and
wherein each collected log entry is added to an in-vehicle log collection as vehicle log entry of the respective automated driving vehicle collecting said log entry and
wherein each collected log entry together with the vehicle's unique assigned vehicle ID is also communicated to a central log server and added to a central log collection as server log entry associated with the unique assigned vehicle ID;
wherein the device comprises a hub communication system configured to communicate with the individual automated driving vehicle to be authenticated of said automated driving vehicles, and configured to communicate with the central server,
an authentication unit coupled to the hub communication system and an output unit connected to the authentication unit, wherein the authentication unit is configured to perform an authentication said automated driving vehicle to be authenticated by retrieving the unique assigned vehicle ID from said one of the automated driving vehicles and
retrieving a set of vehicle log entries from the in-vehicle log collection, wherein the set of retrieved vehicle log entries is specified by one or more vehicle authentication parameters, and communicating the retrieved unique assigned vehicle ID and one or more server authentication parameters to the central server and retrieving a set of server log entries associated with the communicated retrieved unique assigned vehicle ID from the central server's central log collection, wherein the set of retrieved server log entries is specified by said one or more server authentication parameters,
comparing the set of retrieved vehicle log entries and the set of server log entries in a comparison unit and deriving a comparison result, and based on the comparison result either authenticating said one of the automated driving vehicles as being the genuine automated driving vehicle associated with a unique assigned vehicle ID or denying authentication of said one of the automated driving vehicles by providing an authentication message via the output unit.

Further a vehicle authentication device for an automated driving vehicles of a group of automated driving vehicles is provided, wherein each automated driving vehicle has a unique assigned vehicle ID, wherein the vehicle authentication device comprises a memory for storing the unique assigned vehicle ID and a log entry collection unit configured to collect log entries during operation of the automated driving vehicle, each log entry comprises at least a timestamp and a datum specifying the log entry event, wherein the timestamp specifies the time of occurrence of said log entry event,
wherein the log entry collection unit is configured to add each log entry to an in-vehicle log collection saved in the memory and also to retrieve the unique assigned vehicle ID and to communicate each log entry together with the unique assigned vehicle ID to a central server via a communication system, for the log entries to be added to a server's central log collection, and wherein a control unit is configured to establish a communication connection via the communication system to a hub authentication device upon arrival at a hub authentication device, and to retrieve from its memory and supply to the hub authentication device the unique assigned vehicle ID and log entries specified by one or more vehicle authentication parameters received from the hub authentication device.

Also a central log server for storing log entries of automated driving vehicles of a group of automated driving vehicle comprising a server communication system for receiving log entries each together with a respective unique assigned vehicle ID and a memory to store the received log entries associated with the respective unique assigned vehicle IDs in a central server log collection and a control unit connect the server communication system configured to establish a communication connection to at least one hub authentication device, wherein the control unit is configured to receive a unique assigned vehicle ID and one or more server authentication parameters from the hub authentication device and to retrieve log entries specified by the server authentication parameters and the unique assigned vehicle ID from the central log collection in the memory and to communicate these to the hub authentication device via the server communication system.

Finally, a system for authentication of an automated driving vehicle of a group of automated driving vehicles at at least one hub is provided. The system comprises vehicle authentication devices as described herein one in each of said automated driving vehicles, at least one hub authentication device as described herein at the at least one hub and at least one central server as described herein, wherein the system configured to perform the method as described herein.

To increase the security further, log parameters are preferably added to the log entries. According to a preferred embodiment further one or more log parameters are added to the log entry, wherein the one or more log parameters are selected from the group comprising:
an index, a geolocation of the log entry event, an event type ID classifying the log entry event, vehicle status parameters, environment parameters, communication status parameters, wherein the vehicle parameters comprise a velocity, an acceleration, a braking status, an engine status etc.

It is advantageous for example to have an index of the log entries which is preferably made up of consecutive numbers. This way, one can check the completeness of the log entries easily. Further, it is very advantageous to add, geolocation information's to each log entry. It is possible to log different types of events occurring during operation of the automated driving vehicle. To identify certain events it is helpful to classify the different log entry events and add an event type ID to each log entry. For completeness and also increasing the security further other parameters like the vehicle status, environment parameters, communication status parameters, velocity, and an iteration, braking status or an engine status, to name just a few can be added to collected log entries. The number of parameters added to each log entry may vary. It is for example possible to log each communication event that is carried out with the traffic control unit to have an ongoing and detailed log entry collection.

In a preferred embodiment the vehicle authentication parameters and /or the server authentication parameters are selected from the group of parameters defining a timestamp or a time stamp interval, one or more event type IDs, one or more event indices, one or more geolocation locations and/or a geolocation area. This way it is possible to optimize the log entries that will be used for authentication. There is no need to process all log entries that have been collected by the vehicle in the past. For example, only log entries of the last operation cycle since leaving the hub prior to the present authentication request, as well as some older log entries might be specified by the log parameters.

In one embodiment the vehicle authentication parameters and the server authentication parameters are identical. In this case the retrieved log entries from the vehicle to be authenticated and from the central log server, i.e., all retrieved vehicle log entries and all retrieved server log entries can be compared and checked for identity to authenticate the automated driving vehicle as the genuine vehicle to which the unique identification ID is assigned in case identity has been established. Otherwise, the automated driving vehicle will not be authenticated as a genuine authenticated vehicle which is associated with the unique assigned vehicle ID. In the latter case access to the hub will be denied. At least an automated authentication cannot be carried out in this case. It will be necessary to have human personnel to perform the authentication. In this case and establish the reason why the retrieved log entries are not identical.

According to one method, thus, a positive comparison result leading to the authentication of that one of the automated driving vehicles is derived when all vehicle log entries retrieved and respective server log entries are identical or all retrieved server log entries and the respective vehicle log entries are identical. It is pointed out that this does not necessarily mean that all retrieved vehicle log entries and all retrieved server log entries have to be identical. There might be cases where one retrieves more server log entries than vehicle log entries or vice a versa. This can be achieved by choosing the server authentication parameters and the vehicle authentication parameters responsible for the selection of the log entries retrieved differently.

To cope with service outages, interruptions in the communications with the central server, for example, according to one embodiment a predefined number of randomly chosen vehicle log entries from the retrieved set of vehicle log entries is compared to the respective server log entries and the positive comparison result is derived only if all or at least a threshold number of these compared vehicle log entries and server log entries are identical, and/or another predefined number of randomly chosen server log entries from the retrieved set of server log entries is compared to the respective vehicle log entries and a positive comparison result is derived only if entries all or at least a threshold number of the compared server log entries are identical to the respective vehicle log entries.

To further increase the security in some embodiments the retrieved unique assigned vehicle ID is verified against a database of genuine unique assigned vehicle IDs associated with the hub. This ensures that hacker is not able to foist an automated driving vehicle on the hub or the fleet owner of the hub by communicating and providing log entries to the central server while using a non-genuine unique assigned vehicle ID for the fraudulent automated driving vehicle.

Preferably, the vehicle log entries are saved in a vehicle log file as the in-vehicle log collection, wherein the vehicle log file is stored in memory of the vehicle. Any means of memory can be used, such as hard drives, solid-state drives, USB sticks, random access memory or any other memory known in the art. The use of the log file makes it easy to handle all the log entries especially on any network drive or memory upon exchange of the vehicle log collection.

Respectively, in some embodiments the server log entries associated with a unique assigned vehicle ID are stored in a server log file associated with said unique assigned vehicle ID, wherein the server log files associated with the different unique assigned vehicle IDs are stored in a memory of the central log server as part the central log collection. It is therefore possible to retrieve a log file from the vehicle, as well as a log file from the central log server and use file comparison mechanisms and methods for authentication. It is not even necessary to know anything about the precise log entries in case both log files are assembled according to the same format and standard in the vehicle, as well as in the central log server.

To cope with situations where the communication interface has been hacked and where a fraudulent automated driving vehicle is capable of communicating its own log entries to the central log server, it is advantageous to not just use recent log entries collected during the current operations service, but also to look at log entries that have been collected prior to the last successful authentication of the respective automated driving vehicle. Therefore, in some embodiments the one or the more vehicle authentication parameters and the one or the more server authentication parameters are chosen such that the retrieved vehicle log entries and the retrieved server log entries comprise at least one log entry corresponding to each other that has been collected prior to the time the automated driving vehicle to be authenticated has been authenticated as being a genuine vehicle of the respective hub before.

To further reduce this risk that none genuine log entries are introduced into the central server log or genuine log entries are disclosed during communication of the vehicle with the hub it is advantageous that all communication between the automated driving vehicles and the hib, the automated driving vehicles and the central server and between the hub and the central server are encrypted.

It is advantageous to use a public-private key encryption for communication between the respective communication partners.

In the following the invention will be described in more detail with reference to the following figures:

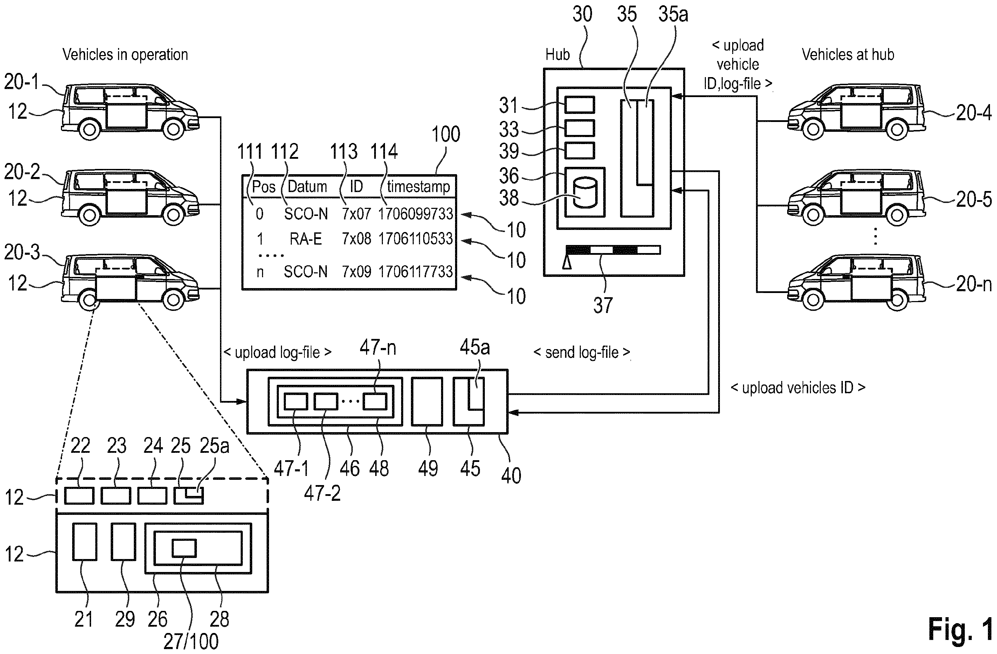

- Fig. 1: a schematic drawing depicting the operation of several automated driving vehicles in connection with the central hub.

The invention will be explained with reference to a possible embodiment. The embodiment should not be construed to be limiting for the scope of the invention, but it is rather used, to explain one of a variety of possibilities to work the invention.

In figure 1, a fleet 10 comprises a multitude of automated driving vehicles 20, 20-n. Associated with the fleet is also at least one hub 30 which is used to service the automated driving vehicles 20, 20-n. On the premises of the at least one hub 30 the automated driving vehicles 20, 20-n are parked, cleaned, have their batteries recharged, download and upload software etc. In order to ensure that only automated driving vehicles 20, 20-n of the own fleet 10 are serviced the automated driving vehicle 20, 20-n is authenticated when arriving at the at least one hub 30. For this reason and to identify each of the automated driving vehicles 20, 20-n a unique vehicle ID is assigned to each of the automated driving vehicles 20, 20-n. Thus, each automated driving vehicle comprises a unique assigned vehicle ID.

During operation, after having left the hub 30, each automated driving vehicle 20, 20-n collects log entries. For this purpose, each automated driving vehicle 20, 20-n comprises a log entry collection unit 21. Different units like a time keeping unit 23, satellite navigation system 24, a communication system 25, and sensors 22, to name but a few, of the automated driving vehicle 20, 20-n are connected to the respective log entry collection unit 21

Each of the automated driving vehicles 20, 20-n collects log entries 100, 100-i at different log events. The log entry collection unit 21 collects log entries for different events, these events could be communication events with the traffic control unit (TCU), certain automated driving related situations/events involving for example a "safety-critical occurrence notification" (SCO-N), a "remote assistance event" (RA-E) etc.

For each event that is logged a datum 112 describing the kind of event log and at least a timestamp 114 are combined into a log entry 110. The log entries 110 are preferably indexed and therefore comprise an index 111. This is preferably an integer number numbering the log events in their consecutive order of occurrence/collection. In order to ease the grouping of certain events, event datums 112 are preferably classified according to certain event types. Each event type is associated with an event type ID 113. Instead of the event type, usually only the event type ID 113 is preferably also added to the log entry 110. Log entries 110 might comprise further information like an environment status information, vehicle status information, communication status information etc.

Each log entry 110 is added to an in-vehicle log collection 28. The in-vehicle log collection is usually kept in a log file 27, 100. It is also possible to store the log entries in an in-vehicle database or something similar. For storing the log entries 110 in the in-vehicle log collection 28 the automated driving vehicle comprises one or more memories 26. The memory 26 can comprise any memory that is capable of storing something like a log file 27, for example, a hard disk drive, solid-state disk drive, solid-state memory, random access memory etc. and/or a combination thereof.

Additionally, each log entry 110 together with the unique assigned vehicle ID is also communicated via the communication system 25 to at least one central log server 40. The at least one central log server 40 comprises its own communication system 45 to communicate with the automated driving vehicles 20, 20-n. Any type of communication system 45 that is capable of carrying out a communication between the automated driving vehicles 20, 20-N and the central log server 40 can be used. The communication system 45 can be configured as a GSM cell phone system, or any other communication systems partly using wireless communication between the automated driving vehicles 20, 20-n and some communication infrastructure that in turn is connected to the central log server 40.

There may be embodiments that comprise more than the at least one log server 40 for security and backup reasons, which store the same information and automatically interchange and update the information communicated to the respective at least one central log server 40. The depicted embodiment comprises the at least one central log server 40, only. The at least one central log server 40 adds the received log entry 110 together with the associated unique assigned vehicle ID to a central log collection 48. One possible form of organization of the central log collection comprises a central log file 47 for each of the automated driving vehicles associated with a unique assigned vehicle ID. Other forms of organizations have the log entries together with the unique assigned vehicle IDs stored in a database. The central log collection 48 is kept in a memory 46 of the at least one central log server 40. This can be any type of memory capable of storing the central log collection, e.g., hard disc drives, solid-state drives, solid-state memory banks, random access memory, etc. and any combination thereof.

In order to keep the communicated log entries 110 secret, all communication with the at least one central log server 40 is preferably encrypted. Any type of encryption can be used. Preferably a private public key type of encryption is used. The private and public keys are exchanged. Preferably, at the hub 30 when the authenticity of the automated driving vehicle 20, 20-n is well established.

After finish its driving operations the automated driving vehicle 20, 20-n returns to its hub 30. Prior to granting access to the premises of the hub and to any services provided, the automated driving vehicle 20 needs to be authenticated to be the vehicle to which the unique the assigned vehicle ID belongs.

This is performed by using a hub authentication device. The hub 30 uses a hub communication system 35 to establish a communication connection with the communication system 25 of the automated driving vehicle 20, 20-n. The hub 30 retrieves the unique assigned vehicle ID from the automated driving vehicle 20, 20-N. Preferably, the hub 30 comprises a database 38 or some other storage means containing the genuine unique assigned vehicle IDs of all automated driving vehicles in the fleet 10, or at least those assigned to the respective hub 30.

Thus, in a preferred embodiment the hub 30 first verifies that the retrieved unique assigned vehicle ID is a genuine vehicle ID. Once this has been established the hub 30 retrieves a set of vehicle log entries from the in-vehicle log collection of the respective automated driving vehicle 20, 20-n. For this purpose, vehicle authentication parameters are exchanged between the hub 30 and the respective automated driving vehicle 20, 20-N via a control unit 29. The vehicle authentication parameters can comprise a time stamp interval, certain event type IDs or and information that all log entries present should be provided by the automated driving vehicle for authentication purposes. Authentication parameters can be used to limit the amount of log entries to be exchanged for authentication purposes.

In one embodiment, the of vehicle authentication parameters indicate to the vehicle to provide the that the complete in-vehicle log file 27. Thus, the hub 30 retrieves the log entries 110 specified by the vehicle authentication parameters.

Simultaneously or afterwards, the hub 30 communicates the unique assigned vehicle ID to the at least one central log server 40 together with server authentication parameters that define the log entries to be provided for authentication. This communication is carried out via the hub communication system 35 an the server's communication system 45. The unique assigned vehicle ID can be part of the server authentication parameters. In one embodiment, the server authentication parameters indicate to provide the complete server log file associated with the unique assigned vehicle ID communicated to the central log server40. In other circumstances the server authentication parameters limit the log entries to be provided in the same fashion as described for the automated driving vehicle above. For authentication purposes, it will be necessary that the cross-section of the set of vehicle log entries in the set of server log entries is not empty. Preferably, the set of legal log entries and the set of server log entries correspond to each other on a one-to-one basis. Other embodiments, the set of vehicle log entries can be the "subset" of the set of server log entries or vice a versa. A control unit 49 provides the retrieves the requested log entries 110, e.g. a log file 47,47-n from the server log collection 48 in the memory 46 via the communication system 45 comprising for example an encryption unit 25a as well.

One set of log entries is a subset of another set of log entries when the another set of log entries comprises a corresponding log entry log for each log and entry of said one set of log entries. If said another set of log entries comprises further log entries for which there is no corresponding log entry in one set of log entries, the one set of log entries is a true subset of said other set of log entries.

Corresponding log entries in this respect are log entries that refer to the same time stamp. If there are two or more log entries with identical timestamp in a log collection at least one further parameter that differentiates the log entries with the same timestamp in one log collection has to be identical in the entries of the different sets to ensure correspondence.

In the simplest embodiment a comparison unit 33 of the hub compares the set of vehicle log entries with the set of server log entries. Depending on the comparison result an authentication unit 31 provides and/or outputs in authentication signal via an output unit 39, which either indicates that the automated driving vehicle is the genuine automated driving vehicle associated with the unique assigned vehicle ID or otherwise indicates that the authentication failed. In the second case it might be necessary to use other authentication methods to verify the authentication result.

In the 1^{st} case the authentication signal might be used, to open gate 37 to allow the automated driving vehicle to enter the premises of the hub. In the 2^{nd} case the authentication signal will prevent the gate 37 from opening thus keeping the automated driving vehicle from entering the premises of the heart and using the services provided at the hub 30.

In order to limit the amount of data to be compared only a selection of log entries might be compared between the vehicle log entries and the respective server log entries. In one embodiment, for example, a certain number of randomly chosen vehicle log entries is compared to the respective corresponding server log entries. The simplest comparison unit establishes a number of identical corresponding log entries between the randomly chosen vehicle log entries and the respective corresponding server log entries. In one embodiment, this established number has to meet the certain number of randomly chosen vehicle log entries. In another embodiment, there might be a threshold number which needs to be reached in order to reach a positive authentication result. A threshold number that is lower than the certain number of randomly chosen log entries is used in embodiments to cope with communication outages during the operation of the automated driving vehicles. These could be caused by bad weather conditions, servicing intervals of the central log server, etc.

In other embodiments, a certain number of randomly chosen server log entries might be compared to the respective vehicle log entries.

To cope with situations where there has been a breach in communication security and where a fraudulent automated driving vehicle has communicated its log entries together with the stolen unique assigned vehicle ID to the at least one central log server, the authentication parameters, i.e. the vehicle authentication parameters and the server authentication parameters are, preferably chosen such that at least one log entry is selected from the server log collection and the vehicle log collection that has been collected by the genuine automated vehicle prior to the last proper authentication associated with the unique assigned vehicle ID. Thus, fraudulent automated driving vehicles can be identified that have managed to insert fraudulent log entries for a complete operation cycle. The authentication of this automated driving vehicle that is foisted by some unauthorized person on the fleet or the hub will fail as the fraudulent automated vehicle will not have the proper "old" or "ancient" log entry in its in-vehicle log collection.

System 15 for authentication of automated driving vehicles 20, 20-n of a group of automated driving vehicles 20, 20-n at at least one hub 30 comprises the vehicle authentication devices 12 in each of said automated driving vehicles 20, 20-n, at least one hub authentication device 13 at the at least one hub 30 and at least one central log server 40.

The different components and units of the hub authentication device the central log server and of the vehicle authentication device can be embodied by dedicated hardware or by software executed on one or several processing units in the respective devices or the server. The communication systems 25, 35, 45 may be part of the devices or server or may be connected thereto. In the preferred embodiments using encryption of the communications the communication systems 25,35, 45 can comprise encryption units 25a, 35a, 45a. It is also conceivable that the encryption is carried out in different units of the devices and the server. It may be split up between different units end components in each of the devices and the server. It might even be that the log entries or the respective collection 28, 48 or the log files 27, 47, 47-n are encrypted prior to saving. In the case of exchange of complete log files 27, 47, 47-n for authentication and comparison of the log files the hub only needs to be able to decrypt the log files. In case the encryption is carried out using identical keys in the automated driving vehicles 20, 20-n and the central log server 40, preferably involving the unique assigned vehicle IDs to differentiate the encryption of log files 27, 47, 47-n of different automated driving vehicles, no decryption is needed for establishing content identity or not at the hub 30.

Especially the vehicle authentication device 12 my comprise the sensors 22, the timekeeping unit 23, the satellite navigation system 24, which might provide the time keeping unit 23, and/or the communication system 25. In some embodiment thought these components might only be linked to the vehicle authentication device 12 and be themselves separate components or units or belong to other vehicle systems.

There are embodiments also having several hubs. The authorization is carried out identically at the different hubs using the same central log server.

Especially when complete log files are compared the server authorization parameters may be empty. The transmission of the unique assigned vehicle ID by the hub authentication device is interpreted as request to send the respective log file. The vehicle authorization parameters may just comprise the request to send the vehicle's log file.

It will be understood by the person skilled in the art that only certain nonlimiting embodiments have been described in connection with the drawing of fig. 1. The features and aspects described can be used in different combinations to work the invention.

### Reference numerals

- 10: fleet
- 12: vehicle authentication device
- 13: hub authentication device
- 15: system for authentication of automated driving vehicles
- 20, 20-n: automated driving vehicle
- 21: log entry collection unit
- 22: sensors
- 23: timekeeping unit
- 24: satellite navigation system
- 25: communication system
- 25a: encryption unit
- 26: memory
- 27: log file
- 28: in-vehicle log collection
- 29: control unit
- 30: hub
- 31: authentication unit
- 33: comparison unit
- 35: hub communication system
- 35a: encryption unit
- 36: memory
- 37: gate
- 38: database (genuine vehicle IDs)
- 39: output unit
- 40: central log server
- 42: authentication process API
- 45: communication system
- 45a: encryption unit
- 46: memory
- 47, 47-n: log files
- 48: central log collection
- 49: control unit
- 100: log file
- 110: log entry
- 111: index
- 112: datum
- 113: event type ID
- 114: time stamp

## Claims

1. Method for authenticating automated driving vehicles (20, 20-n) of a group of automated driving vehicles (20, 20-n) at hub (30), wherein each automated driving vehicle has a unique assigned vehicle ID, the method comprising the steps of:
collecting log entries (110) by the automated driving vehicles (20, 20-n) during operation, wherein each log entry comprises at least a timestamp (114) and a datum (112) specifying the log entry event, wherein the timestamp (114) specifies the time of occurrence of said log entry event,
adding each collected log entry (110) to an in-vehicle log collection (28) as vehicle log entry of the respective automated driving vehicle (20, 20-n) collecting said log entry (110) and
also communicating each collected log entry (110) together with the vehicle's unique assigned vehicle ID to a central log server (40) and adding the log entry (110) to a central log collection (48) as server log entry associated with the unique assigned vehicle ID;
and performing an authentication of one of the automated driving vehicles (20, 20-n) at the hub (30) by
retrieving unique assigned vehicle ID from said one of the automated driving vehicles (20, 20-n) and
retrieving a set of vehicle log entries (110) from the in-vehicle log collection (28), wherein the set of retrieved vehicle log entries (110) is specified by one or more vehicle authentication parameters, and communicating the retrieved unique assigned vehicle ID and one or more server authentication parameters to the central server (40) and retrieving a set of server log entries associated with the communicated retrieved unique assigned vehicle ID from the central server's (40) central log collection (48), wherein the set of retrieved server log entries is specified by said one or more server authentication parameters,
comparing the set of retrieved vehicle log entries (110) and the set of server log entries and deriving a comparison result, and based on the comparison result either authenticating said one of the automated driving vehicles (20, 20-n) as being the genuine automated driving vehicle associated with a unique assigned vehicle ID or denying authentication of said one of the automated driving vehicles (20, 20-n) by providing an authentication message.

2. Method according to claim 1, wherein further one or more log parameters are added to the log entry, wherein the one or more lock parameters are selected from the group comprising:
an index, a geolocation of the log entry event, event type ID classifying the log entry event, vehicle status parameters, environment parameters, communication status parameters, wherein the vehicle parameters comprise a velocity, an acceleration, a braking status, an engine status.

3. Method according to claim 1 or 2, wherein the vehicle authentication parameters and /or the server authentication parameters are selected from the group of parameters defining a timestamp or a time stamp interval a time stamp interval, one or more event type IDs, one or more event indices, one or more geolocation locations and/or a geolocation area.

4. Method according to any one of the above claims, wherein the vehicle authentication parameters and the server authentication parameters are identical.

5. Method according to any 1 of the above claims, wherein a positive comparison result leading to the authentication of said one of the automated driving vehicles (20, 20-n) is derived when all vehicle log entries (110) retrieved and the respective server log entries are identical or all retrieved server log entries and the respective vehicle log entries (110) are identical.

6. Method according to any 1 of the claims 1 to 5, wherein a predefined number of randomly chosen vehicle log entries (110) from the retrieved set of vehicle log entries (110) is compared to the respective server log entries and the positive comparison result is derived only if all or at least a threshold number of these compared vehicle log entries (110) and server log entries are identical, and/or another predefined number of randomly chosen server log entries from the retrieved set of server log entries is compared to the respective vehicle log entries and a positive comparison result is derived only if all or at least a threshold number of the compared server log entries are identical to the respective vehicle log entries (110).

7. Method according to any 1 of the above claims, wherein the retrieved unique assigned vehicle ID is verified against a database (38) of genuine unique assigned vehicle IDs associated with the hub (30).

8. Method according to any one of the claims above, wherein the vehicle log entries (110) are saved in the vehicle log file (27) as the in-vehicle log collection (28), wherein the vehicle log file (28) is stored in a memory 26 of the vehicle (20, 20-n).

9. Method according to any one of the claims above, wherein the server log entries associated with a unique assigned vehicle ID are stored in a server log file (47, 47-n) associated with said unique assigned vehicle ID, wherein the server log files (47, 47-n) associated with the different unique assigned vehicle IDs are stored in a memory (46) of the central log server (40) as part the central log collection (48).

10. Method according to any 1 of the claims above, wherein the one or the more vehicle authentication parameters and the one or the more server authentication parameters are chosen such that the retrieved vehicle log entries (110) and the retrieved server log entries comprise at least one log entry corresponding to each other that has been collected prior to the time the automated driving vehicle to be authenticated has been authenticated as being a genuine vehicle of the respective hub (30) before.

11. Method according to any 1 of the claims above, wherein all communication between the automated driving vehicles (20, 20-n) and the hub (30), the automated driving vehicles (20, 20-n) and the central log server (40) and between the hub (30) and the central log server (40) are encrypted.

12. Method according to claim 11, wherein private public key encryption is used between the respective communication partners.

13. Hub authentication device (31) for authenticating automated driving vehicles (20, 20-n) of a group of automated driving vehicles (20, 20-n) at hub (30), wherein each automated driving vehicle has a unique assigned vehicle ID, wherein each automated driving vehicle (20, 20-n) is configured to collect log entries (110) the during operation, wherein each log entry comprises at least a timestamp (114) and a datum (112) specifying the log entry event, wherein the timestamp (114) specifies the time of occurrence of said log entry event,
and wherein each collected log entry (110) is added to an in-vehicle log collection (28) as vehicle log entry of the respective automated driving vehicle (20, 20-n) collecting said log entry (110) and
wherein each collected log entry (110) together with the vehicle's unique assigned vehicle ID is also communicated to a central log server (40) and added to a central log collection (48) as server log entry associated with the unique assigned vehicle ID;
wherein the device comprises
a hub communication system (25) configured to communicate with the individual automated driving vehicle (20, 20-n) to be authenticated of said automated driving vehicles, and configured to communicate with the central server (40),
an authentication unit (31) coupled to the hub communication system (35) and an output unit (39) connected to the authentication unit (31), wherein the authentication unit (31) is configured to perform an authentication said automated driving vehicle to be authenticated by retrieving the unique assigned vehicle ID from said one of the automated driving vehicles (20, 20-n) and
retrieving a set of vehicle log entries (110) from the in-vehicle log collection (28), wherein the set of retrieved vehicle log entries (110) is specified by one or more vehicle authentication parameters, and communicating the retrieved unique assigned vehicle ID and one or more server authentication parameters to the central server (40) and retrieving a set of server log entries associated with the communicated retrieved unique assigned vehicle ID from the central server's (40) central log collection (48), wherein the set of retrieved server log entries is specified by said one or more server authentication parameters,
comparing the set of retrieved vehicle log entries (110) and the set of server log entries in a comparison unit (33) and deriving a comparison result, and based on the comparison result either authenticating said one of the automated driving vehicles (20, 20-n) as being the genuine automated driving vehicle associated with a unique assigned vehicle ID or denying authentication of said one of the automated driving vehicles (20, 20-n) by providing an authentication message via the output unit (39).

14. Vehicle authentication device (12) for an automated driving vehicle (20, 20-n) of a group of automated driving vehicles (20, 20-n), wherein each automated driving vehicle (20, 20-n) has a unique assigned vehicle ID, wherein the vehicle authentication device (12) comprises
a memory (26) for storing the unique assigned vehicle ID and
a log entry collection unit (21) configured to collect log entries (110) during operation of the automated driving vehicle (20, 20-n), each log entry (110) comprises at least a timestamp (114) and a datum (112) specifying a log entry event, wherein the timestamp (114) specifies the time of occurrence of said log entry event,
wherein the log collection unit (21) is configured
to add each log entry(110) to an in-vehicle log collection (28) saved in the memory (26) and also
to retrieve the unique assigned vehicle ID and
to communicate each log entry together with the the unique assigned vehicle ID to a central server (40) via a communication system (25), for the log entries to be added to a server's central log collection (48), and wherein a control unit (29) is configured to establish a communication connection to a hub authentication device (13) upon arrival at a hub authentication device (13), and to retrieve from its memory (26) and supply to the hub authentication device (13) the unique assigned vehicle ID and log entries (110) specified by one or more vehicle authentication parameters received from the hub authentication device (13).

15. Central log server (40) for storing log entries of automated driving vehicles (20, 20-n) of a group of automated driving vehicle (20, 20-n) comprising a server communication system (45) for receiving log entries (110) each together with a respective unique assigned vehicle ID and a memory (46) to store the received log entries (110) associated with the respective unique assigned vehicle IDs in a central server log collection (48) and a control unit (49) connect the server communication system (45) configured to establish a communication connection to at least one hub authentication device (13), wherein the control unit is configured to receive a unique assigned vehicle ID and one or more server authentication parameters from the hub authentication device (13) and to retrieve log entries (110) specified by the server authentication parameters and the unique assigned vehicle ID from the central log collection (48) in the memory (47) and to communicate these to the hub authentication device (13) via the server communication system (45).

16. System (15) for authentication of automated driving vehicles of a group of automated driving vehicles at at least one hub (30) the system comprising vehicle authentication device (12) according to claim 13 in each of said automated driving vehicles(20, 20-n), at least one hub authentication device (13) according to claim 14 at the at least one hub (30) and at least one central log server (40) according to claim 15, the system configured to perform the method according to any one of the claims 1 to 12.
